# EUROPEAN PATENT APPLICATION

(11) **EP 1 871 051 A1**
(43) Date of publication of application: **26.12.2007**
(21) Application number: 06713761.2
(22) Date of filing: 15.02.2006
(51) Int. Cl.: H04L 12/56

(54) **INFORMATION PROCESSING SYSTEM, INFORMATION PROCESSING APPARATUS, AND INFORMATION PROCESSING METHOD**

(30) Priority: 14.04.2005 JP 2005116896
(71) Applicant: MATSUSHITA ELECTRIC INDUSTRIAL CO., LTD., Osaka 571-8501 (JP)
(72) Inventor: MAEKAWA, Hajime Matsushita Electric Industrial Co. Ltd, Osaka 540-6207 (JP); MATSUMOTO, Kenichi Matsushita Electric Industrial Co. Ltd, Osaka 540-6207 (JP)
(74) Representative: Grünecker, Kinkeldey, Stockmair & Schwanhäusser Anwaltssozietät
(86) International application number: PCT/JP2006/302620
(87) International publication number: WO 2006/112120

(57) **Abstract**

An information processing apparatus (10) includes a reception portion (11) which accepts transmission information which is information to be transmitted; a plurality of tunnel communication portions (13, 14, 15) which perform tunnel communications, for encapsulating and transmitting packets, with different terminal devices, respectively; and a transmission portion (12) which transmits a packet relating to the transmission information accepted by the reception portion (11) to the plurality of terminal devices (101, 102, 103) via the plurality of tunnel communication portions (13, 14, 15), respectively. The destination addresses of inner packets contained in respective packets encapsulated by the plurality of tunnel communication portions (13, 14, 15) are the same. The information processing apparatus can simultaneously transmit image data etc. to the plurality of terminal devices via a communication line.

## Description

### <Technical Field>

The present invention relates to an information processing apparatus etc. for performing a tunnel communication.

### <Background Art>

Conventionally, multicast has been developed as a technique of simultaneously transmitting audio data and image data to a plurality of devices. A technique of constituting a VPN has also been developed by using the multicast. An example of such a technique is disclosed in JP-A-2000-371913.

In the case of transmitting image data etc. via IP communication lines by using the multicast, IGMP (Internet Group Management Protocol) is used. The IGMP is a protocol for controlling a group (multicast group) of devices which receive image data etc. in the multicast.

However, in the case of transmitting image data etc. by using the multicast, if routers of wide- area communication lines through which image data etc. is transmitted include a router not coping with the multicast, the image data etc. can not be transmitted to devices existing ahead of the router. Thus, the transmission of image data etc. using the multicast can be executed in quite limited circumstances.

Further, in the case of transmitting image data etc. by using the multicast, there arises a problem that a workload for managing the multicast group using the IGMP is large. In particular, in the case of using the IGMP, since a transmission amount of a packet in a communication line becomes large, there also arises a problem that a communication load of the communication line becomes excessive. Furthermore, in the case of using the IGMP, there also arises a problem that a router is required to perform a processing of confirming whether or not a terminal device to which image data etc. is transmitted has a right of receiving a multicast packet and so a load of performing such a processing is large.

### <Disclosure of the invention>

An information processing apparatus according to the invention is the information processing apparatus, including: a reception portion which accepts transmission information which is information to be transmitted; a plurality of tunnel communication portions which perform tunnel communications with different terminal devices, respectively; and a transmission portion which transmits a packet relating to the transmission information accepted by the reception portion to a plurality of the terminal devices via the plurality of tunnel communication portions, respectively, wherein a destination address of an inner packet contained in encapsulated packets to be transmitted from the plurality of tunnel communication portions are same. Further, an information processing system according to the invention is configured by the information processing apparatus and an information transmission apparatus for transmitting transmission information to the information transmission apparatus.

According to such a configuration, even if a router not coping with the multicast exists at a communication line, information can be transmitted simultaneously to a plurality of the terminal devices via a plurality of paths of the tunnel communications. Further, since the destination address of the packet to be sent to the respective tunnel communication portions from the transmission portion are the same, the transmission portion is not required to perform such a processing of changing an address at every destination and so the processing load at the transmission portion can be reduced.

Further, an information processing method according to the invention is the information processing method including: a reception step for accepting transmission information which is information to be transmitted; a transmission step for sending a packet relating to the transmission information accepted by the reception step to a plurality of plurality of tunnel communication portions which perform tunnel communications with different terminal devices, respectively; and a tunnel transmission step in which the plurality of tunnel communication portions transmit encapsulated packets to a plurality of the terminal devices, respectively, wherein a destination address of an inner packet contained in the encapsulated packets to be transmitted from the plurality of tunnel communication portions are same.

Further, a program according to the invention is the program for making a computer execute following steps which includes: a reception step for accepting transmission information which is information to be transmitted; a transmission step for sending a packet relating to the transmission information accepted by the reception step to a plurality of plurality of tunnel communication portions which perform tunnel communications with different terminal devices, respectively; and a tunnel transmission step in which the plurality of tunnel communication portions transmit encapsulated packets to a plurality of the terminal devices, respectively, wherein a destination address of an inner packet contained in the encapsulated packets to be transmitted from the plurality of tunnel communication portions are same.

According to the information processing apparatus etc. of the invention, even if the routers of wide- area communication lines such as the internet include a router not coping with the multicast, data such as image data can be transmitted simultaneously to a plurality of the terminal devices by using a plurality of the tunnel communications.

### <Brief Description of the Drawings>

Fig. 1 is a diagram showing the configuration of an information processing system according to an embodiment of the invention.
Fig. 2 is a diagram showing the configuration of the terminal device of the embodiment.
Fig. 3 is a flowchart showing the operation of an information processing apparatus according to the embodiment of the invention.
Fig. 4 is a diagram showing an example of the configuration of an information processing system according to the embodiment.
Fig. 5 is a diagram showing the structure of a packet of the embodiment.
Fig. 6 is a diagram showing the structure of a packet of the embodiment.
Fig. 7 is a diagram showing the structure of a packet of the embodiment.
Fig. 8 is a diagram showing the structure of a packet of the embodiment.
Fig. 9 is a diagram showing an example of the correspondence between the kinds of transmission information and tunnel communication portions for transmitting packets in the embodiment.
Fig. 10 is a diagram showing an example of the correspondence between multicast addressees and the tunnel communication portions for transmitting packets in the embodiment.

### <Explanation of symbols>

- 10: information processing apparatus
- 11: reception portion
- 12: transmission portion
- 13: first tunnel communication portion
- 14: second tunnel communication portion
- 15: third tunnel communication portion
- 21: tunnel communication portion
- 22: processing portion
- 23: output portion
- 51, 61, 71, 81: packet
- 101 to 103: terminal device

### <Best Mode for Carrying Out the Invention>

An information processing apparatus according to the invention includes a reception portion for accepting transmission information, a plurality of tunnel communication portions for performing tunnel communications with different terminal devices, respectively, and a transmission portion, wherein an destination address of an inner packet contained in encapsulated packets transmitted from the plurality of tunnel communication portions are the same.

According to such a configuration, information can be transmitted simultaneously to a plurality of the terminal devices via a plurality of tunnel communication paths. Since the destination address of packets are the same, the transmission portion is not required to perform such a processing of changing an address for each destination, and so the processing load of the transmission portion is reduced.

Further, according to the information processing apparatus of the invention, each of the plurality of tunnel communication portions may encapsulate and transmit a packet.

According to such a configuration, even if the reception portion accepts a not-encapsulated transmission information, each of the plurality of tunnel communication portions can encapsulate and transmit a packet relating to the transmission information.

Further, according to the information processing apparatus of the invention, a destination address of an inner packet contained in an encapsulated packet transmitted from the tunnel communication portion may be a multicast address.

According to such a configuration, even if a router not coping with the multicast is contained in communication lines, information can be transmitted simultaneously to the plurality of terminal devices by the multicast via the plurality of tunnel communication paths. Further, since the management of the multicast group using the IGMP is not necessary despite that the multicast is used, the load of the management can be reduced. For example, it becomes possible to reduce loads such as a communication load for the management using the IGMP.

Further, according to the information processing apparatus of the invention, an inner packet contained in encapsulated packets transmitted from the plurality of tunnel communication portions may be the same.

According to such a configuration, it is not required to perform such a processing of changing a source address for each destination, and so the processing load is reduced.

Hereinafter, the information processing apparatus etc. of the invention will be explained as to embodiments thereof. In the following embodiments, constituent elements and steps with the same signs are identical or corresponding to each other and the duplicated explanations thereof are omitted.

### (Embodiment)

An information processing system according to the embodiment of the invention will be explained with reference to accompanying drawings.

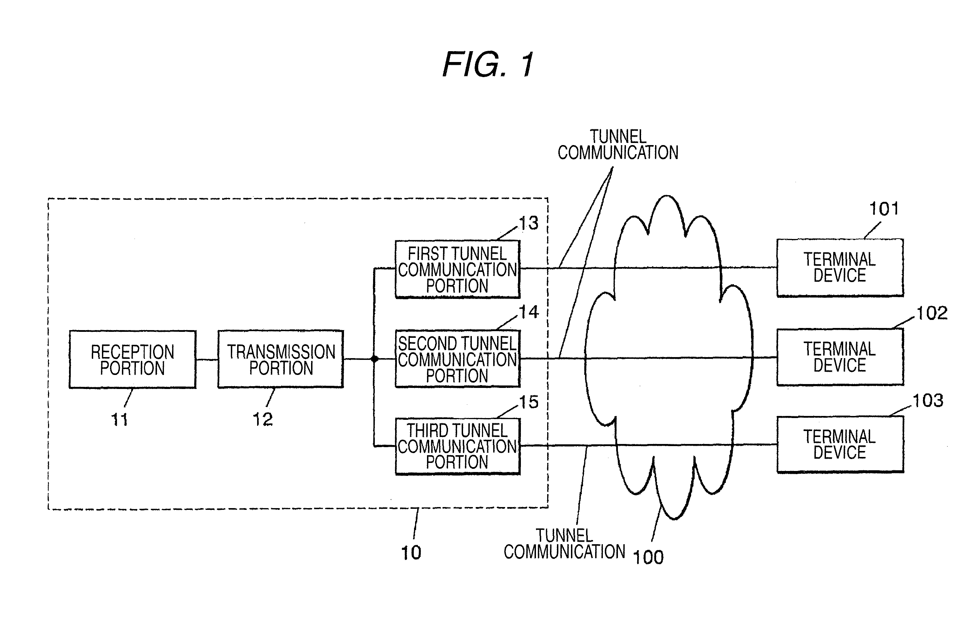

Fig. 1 is a diagram showing the configuration of the information processing system according to the embodiment. In Fig. 1, the information processing system according to the embodiment includes an information processing apparatus 10 and terminal devices 101, 102, 103. The information processing apparatus 10 is coupled to the terminal devices 101 to 103 by means of the tunnel communication via communication lines 100. The communication lines 100 are the internet, intranet or public telephone network etc.

As shown in Fig. 1, the information processing apparatus 10 includes a reception portion 11 m a transmission portion 12, a first tunnel communication portion 13, a second tunnel communication portion 14 and a third tunnel communication portion 15. The reception portion 11 accepts transmission information. The transmission information is information transmitted from the information processing apparatus 10 to the terminal devices 101 to 103. The transmission information may be any kind of information such as image data, sound data, data of software such as an application, or text data. Further, the transmission information may be information divided into packets or information not divided into packets. In the former case, the transmission information may be configured by a plurality of packets or a single packet. The reception portion 11 may receive transmission information transmitted via a wired or wireless communication line or receive transmission information read from a predetermined recording medium (for example, an optical disc, a magnetic disc, semiconductor memory), for example. In this embodiment, the reception portion 11 receives transmitted transmission information. The reception portion 11 may or may not include a device (for example, a modem or a network card) for accepting. Further, the reception portion 11 may be realized by a hardware or a software such as a driver for driving a predetermined device.

The transmission portion 12 transmits a packet relating to transmission information accepted by the reception portion 11 to the terminal devices 101 to 103 via the tunnel communication portions 13 to 15, respectively. The packet relating to transmission information is a packet to be encapsulated at the tunnel communication portions 13 to 15. The packet relating to transmission information may be the packet itself or the packets themselves when the transmission information is a single or a plurality of packets or a packet which header etc. is rewritten. When the transmission information is not a packet, the packet relating to transmission information may be a packet constituted by the transmission portion 12 based on the transmission information or a packet constituted by another constituent element based on the transmission information.

In this embodiment, the destination addresses of packets relating to transmission information to be sent to the tunnel communication portions 13 to 15 are assumed to be the same. For example, the destination address of a packet to be encapsulated may be a multicast address, a broadcast address or a unicast address. In this embodiment, the destination address of a packet to be encapsulated is assumed to be a multicast address.

Since the packets relating to transmission information are encapsulated and transmitted by the tunnel communication portions 13 to 15 described later, the transmission portion 12 in this embodiment does not have a device relating to communication (for example, a modem or a network card). However, the transmission portion 12 may transmit and receive packets to and from the tunnel communication portions 13 to 15 via the device relating to communication.

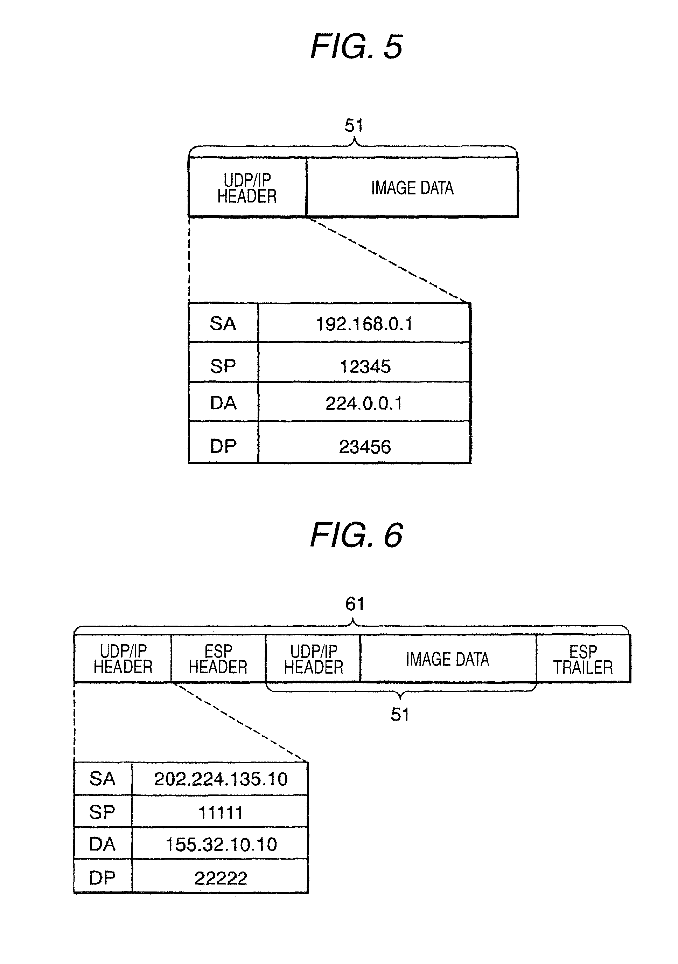

The first tunnel communication portion 13 performs the tunnel communication with the terminal device 101. That is, the first tunnel communication portion 13 encapsulates a packet relating to transmission information sent from the transmission portion 12 and transmits the packet to the terminal device 101. The tunnel communication is a communication performed by using an encapsulated packet. The encapsulation means to wrap a packet to be communicated in a header etc. defined by protocol. A packet to be encapsulated and communicated may be encrypted or may not be encrypted. A packet to be encapsulated and communicated is an original packet shown in Fig. 6 as described later and may be called as an inner packet contained in an encapsulated packet.

Examples of the tunnel communication are UDP (User Datagram Protocol) tunnel communication, HTTP (Hyper Text Transfer Protocol) tunnel communication, and L2TP (LAYER 2 Tunneling Protocol) tunnel communication. The first tunnel communication portion 13 may receive an encapsulated packet transmitted from the terminal device 101 and de-encapsulate the packet. In this case, the information processing apparatus 10 may include a not-shown reception portion for accepting the de-encapsulated packet. The tunnel communication technique has been known and so the detailed explanation thereof is omitted.

The first tunnel communication portion 13 may include a communication device (for example, a modem or a network card) for performing communication or may not include the communication device (in this case, a not-shown communication device exists between the first tunnel communication portion 13 and the communication line 100). Further, the first tunnel communication portion 13 may be realized by a hardware or a software such as a driver for driving the communication device.

A tunnel management device for managing the tunnel communication performed between the first tunnel communication portion 13 and the terminal device 101 may be coupled to the communication line 100. In this case, the tunnel management device performs processing such as a processing necessary for establishing the tunnel communication between the first tunnel communication portion 13 and the terminal device 101, a processing relating to the management of a life time of the tunnel as to whether or not the tunnel communication can be maintained, and a processing for user authentication at the time of establishing the tunnel communication.

The second tunnel communication portion 14 performs the tunnel communication with the terminal device 102. The second tunnel communication portion 14 is similar to the first tunnel communication portion 13 and hence the explanation thereof is omitted.

The third tunnel communication portion 15 performs the tunnel communication with the terminal device 103. The third tunnel communication portion 15 is similar to the first tunnel communication portion 13 and hence the explanation thereof is omitted.

When each of arbitrary two or more of the first tunnel communication portion 13, the second tunnel communication portion 14 and the third tunnel communication portion 15 includes a device relating to communication, these devices may be the same or different. In this embodiment, the explanation will be made as to a case where the first tunnel communication portion 13, the second tunnel communication portion 14 and the third tunnel communication portion 15 perform communication via a single communication device. That is, although three tunnel communication paths are shown independently in Fig. 1, these paths are logical paths, and the first tunnel communication portion 13, the second tunnel communication portion 14 and the third tunnel communication portion 15 are physically coupled to the communication line 100 via a single network card.

Further, when each of arbitrary two or more of the reception portion 11, the first tunnel communication portion 13, the second tunnel communication portion 14 and the third tunnel communication portion 15 includes a device relating to communication, these devices may be the same or different.

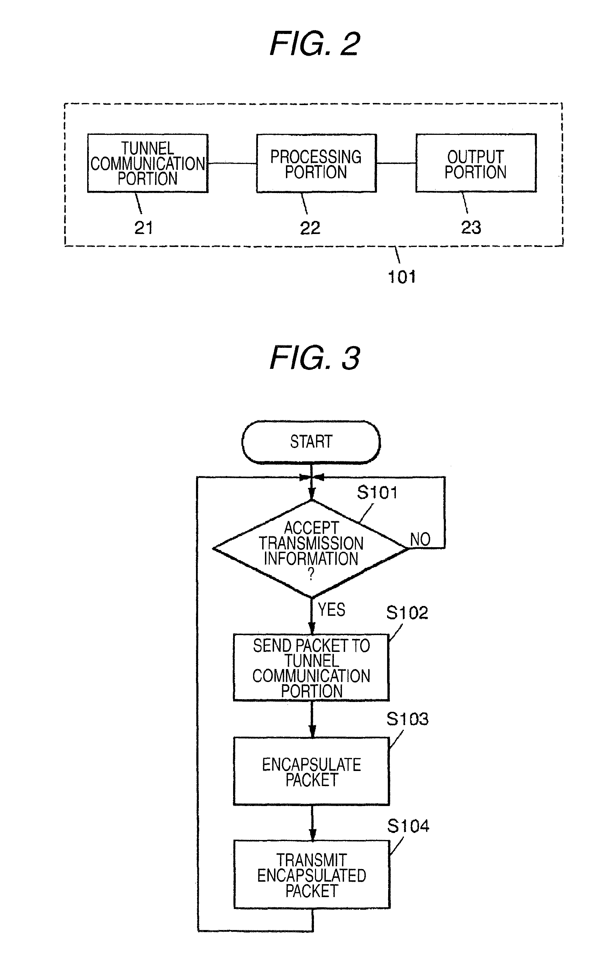

Fig. 2 is a block diagram showing the configuration of the terminal device 101 of the embodiment. In Fig. 2, the terminal device 101 according to the embodiment includes a tunnel communication portion 21, a processing portion 22 and an output portion 23. The terminal device 101 may be, for example, a computer or an image display device etc. for displaying images or may be a communication processing device which intermediates the transmission and reception of information between another device and the information processing apparatus 10. That is, this terminal device may be any type so long as which performs the tunnel communication with the information processing apparatus 10.

The tunnel communication portion 21 performs the tunnel communication with the first tunnel communication portion 13 of the information processing apparatus 10. That is, the tunnel communication portion receives an encapsulated packet transmitted from the first tunnel communication portion 13 and de-encapsulates the packet. The tunnel communication portion 21 may encapsulate and send a packet to the information processing apparatus 10. The tunnel communication portion 21 may include a communication device for communication such as a modem or a network card. The tunnel communication portion 21 may not include a communication device, but in this case a not-shown communication device exists between the tunnel communication portion 21 and the communication line 100. Further, the tunnel communication portion 21 may be realized by a hardware or a software such as a driver for driving the communication device.

The processing portion 22 performs predetermined processing as to a packet de-encapsulated by the tunnel communication portion 21. The predetermined processing may be any kind of processing. The predetermined processing may be a processing for sending a packet de-encapsulated by the tunnel communication portion 21 to the output portion 23. Further, the predetermined processing may be a processing for routing or changing an address of a de-encapsulated packet, for example.

The output portion 23 outputs a packet which is de-encapsulated by the tunnel communication portion 21 and subjected to the predetermined processing by the processing portion 22. This output may be the display on a display device such as a CRT or a liquid crystal display device, the transmission to a predetermined device via a communication line, the printing using a printer, the audio output using a speaker, or the storage in a recording medium. The output portion 23 may include or may not include an output device such as a display device or a printer. Further, the output portion 23 may be realized by a hardware or a software such as a driver for driving the device.

Each of the terminal devices 102 and 103 has the similar configuration as that of the terminal device 101 and so the explanation thereof is omitted.

Next, the operation of the information processing apparatus 10 according to the embodiment will be explained with reference to a flowchart shown in Fig. 3.

(Step S101) The reception portion 11 determines whether transmission information is accepted. When transmission information is accepted, the process proceeds to step S102. Otherwise, the processing of step S101 is repeated until transmission information is accepted.

(Step S102) The transmission portion 12 sends packets relating to the transmission information accepted by the reception portion 11 to the first tunnel communication portion 13, the second tunnel communication portion 14 and the third tunnel communication portion 15.

(Step S103) Each of the first tunnel communication portion 13, the second tunnel communication portion 14 and the third tunnel communication portion 15 encapsulates the packet received from the transmission portion 12.

(Step S104) The first tunnel communication portion 13, the second tunnel communication portion 14 and the third tunnel communication portion 15 transmit encapsulated packets to the terminal device 101, the terminal device 102 and the terminal device 103 by the tunnel communication, respectively. Then the process returns to step S 101.

In steps S103 and S104, the encapsulation of a packet and the transmission of the encapsulated packet may be preformed at the tunnel communication portions independently. Further, in the flowchart of Fig. 3, the processing is terminated in response to the tuming-off of a power supply or an interruption of processing termination.

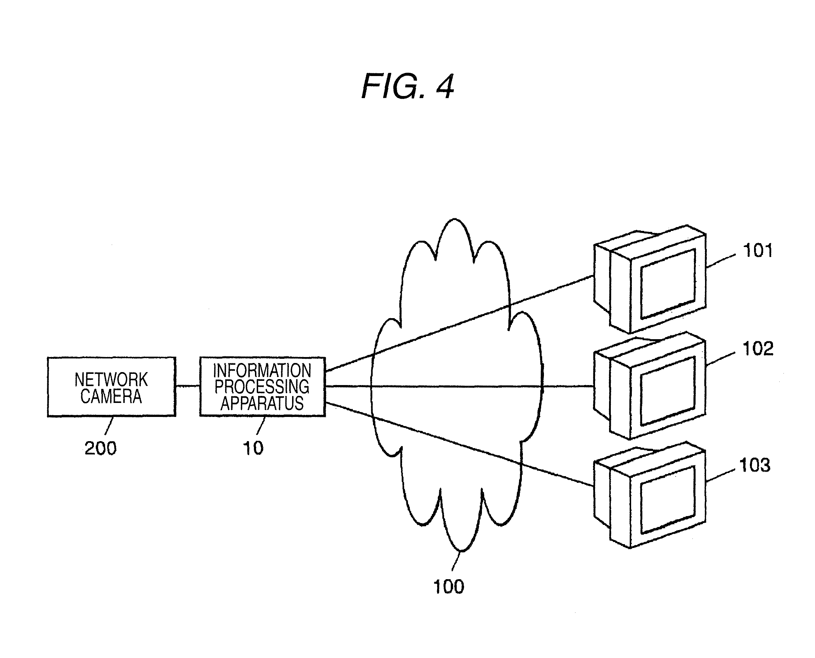

Next, the operation of the information processing apparatus 10 according to the embodiment will be explained with reference to a concrete example. Fig. 4 is a diagram showing the system configuration of the concrete example explained below. In Fig. 4, the information processing apparatus 10 receives transmission information transmitted from a network camera 200 and transmits packets relating to the transmission information to the terminal devices 101 to 103 via the tunnel communication. The network camera 200 includes a not-shown imaging portion and transmits a packet of transmission information including image data picked-up by the imaging portion to the apparatus via a not-shown communication potion. In this case, each of the terminal devices 101 to 103 is an image display device for displaying image data transmitted from the information processing apparatus 10. Further, in this concrete example, the transmission portion 12 transmits packets via all the tunnel communication paths performed by the three tunnel communication portions 13 to 15.

The addresses of the information processing apparatus 10 and the network camera 200 etc. are as follows.
Network camera 200: 192. 168. 0. 1
Information processing apparatus 10 (network camera 200 side): 192. 168. 0. 10
Information processing apparatus 10 (communication line 100 side): 202. 224. 135. 10
Terminal device 101: 155. 32. 10. 10
Terminal device 102: 155. 32. 20. 10
Terminal device 103: 155. 32. 30. 10

Addresses used in the tunnel communication performed between the information processing apparatus 10 and the terminal devices 101 to 103, that is, addresses used in inner packets (an original packet 51 shown in Fig. 6) contained in packets 61 encapsulated in the tunnel communications are as follows.

Information processing apparatus 10 (tunnel communication with the terminal device 101): 10. 8. 1. 10

Information processing apparatus 10 (tunnel communication with the terminal device 102): 10. 8. 1. 11

Information processing apparatus 10 (tunnel communication with the terminal device 103): 10. 8. 1. 12
Terminal device 101: 10. 8. 1. 100
Terminal device 102: 10. 8. 1. 101
Terminal device 103: 10. 8. 1. 103

First, the imaging portion of the network camera 200 picks up an image and a packet of transmission information including image data thus picked-up is transmitted to the information processing apparatus 10 from the network camera 200. Fig. 5 is a diagram showing the structure of the original packet 51 transmitted to the information processing apparatus 10 from the network camera 200. In Fig. 5, SA (Source Address) represents the IP address of an originator. SP (Source Port) represents the port No. of the originator. DA (Destination Address) represents the IP address of a destination. DP (Destination Port) represents the port No. of the destination. A packet transmitted to the information processing apparatus 10 from the network camera 200 is a UDP packet and the destination IP address is set to a multicast address "224. 0. 0. 1 ". The destination port No. is set to "23456".

When the reception portion 11 receives the original packet 51 shown in Fig. 5 transmitted to the information processing apparatus 10 from the network camera 200 (step S101), the reception portion sends the packet to the transmission portion 12.

The transmission portion 12 sends the original packet 51 accepted at the reception portion 11 to the first tunnel communication portion 13, the second tunnel communication portion 14 and the third tunnel communication portion 15 as they are (step S102).

Each of the first to third tunnel communication portions 13 to 15 encapsulates the packet received from the transmission portion 12 (step S103).

To be concrete, as shown in Fig. 6, the encapsulation of a packet is performed by adding an ESP (Encapsulating Security Payload) header and an ESP trailer and further adding a UDP/IP header to the packet received from the transmission portion 12. The ESP header and the ESP trailer are added in order to encrypt the original packet 51 shown in Fig. 6. The destination address (DA) of the UDP/IP header of the encapsulated packet 61 is the IP address of the terminal device 101. The source address (SA) of the UDP/IP header is the communication line 100 side address of the information processing apparatus 10. Each of the second tunnel communication portion 14 and the third tunnel communication portion 15 encapsulates a packet in the similar manner.

The first to third tunnel communication portions 13 to 15 transmit the encapsulated packets 61 to the terminal devices 101 to 103, respectively (step S104). Thereafter, the processing from the reception of a packet at the reception portion 11 to the transmission of the encapsulated packets 61 by the three tunnel communication portions 13 to 15 is repeated.

When the tunnel communication portion 21 of the terminal device 101 receives the encapsulated packets 61 transmitted from the first tunnel communication portion 13, this tunnel communication portion de-encapsulates the received packet and sends the de-encapsulated packet to the processing portion 22. When the processing portion 22 receives the original packet 51 having the construction shown in Fig. 5, the processing portion sends image thereof to the output portion 23. The output portion 23 displays images on a not-shown display.

The processing portion 22 behaves as if the processing portion received a packet transmitted to the multicast addresses from the transmission portion 12. The processing portion may perform any processing such as decoding based on image data contained in a packet sent from the tunnel communication portion 21.

In the aforesaid concrete example, although the explanation is made as to a case where the information transmission device which transmits transmission information to the information processing apparatus 10 is the network camera 200, the information transmission device which transmits transmission information to the information processing apparatus 10 may be a device other than the network camera 200. For example, the information transmission device may be a device which reads transmission information such as image data from a recording medium and transmits the transmission information to the information processing apparatus 10 or a device which receives transmission information such as image data having been broadcasted and transmits the transmission information to the information processing apparatus 10.

Further, in the aforesaid concrete example, although the explanation is made as to a case where the reception portion 11 receives transmission information transmitted from the network camera 200, the reception portion 11 may read transmission information stored in a hard disc drive, for example, and sends the transmission information to the transmission portion 12.

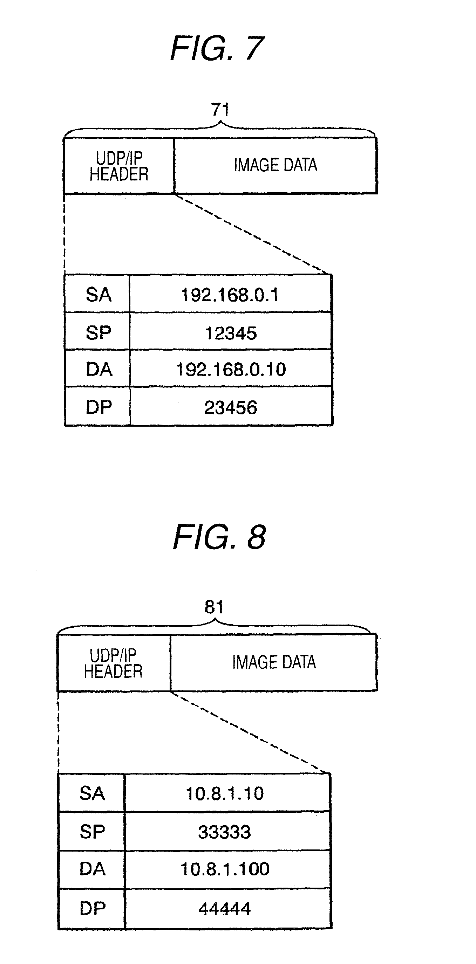

Further, in the aforesaid concrete example, although the explanation is made as to a case where the transmission portion 12 sends a packet accepted by the reception portion 11 to the tunnel communication portions 13 to 15 as they are, the transmission portion 12 may convert a packet, for example. For example, when the reception portion 11 receives a packet 71 shown in Fig. 7, the reception portion may convert the packet into an original packet 51 containing a multicast address shown in Fig. 5 and send the original packet 51 thus converted to the tunnel communication portions 13 to 15. Alternatively, the transmission portion 12 may send a packet which destination address is a broadcast address to the tunnel communication portions 13 to 15 or may send a packet which destination address is a unicast address to the tunnel communication portions 13 to 15. In the latter case, a packet 81 shown in Fig. 8, for example, may be sent to the tunnel communication portions 13 to 15.

In this case, an address of a packet used in an inner packet contained in the encapsulated packet of the tunnel communication may be determined arbitrarily. Thus, when the address of a packet sent to the tunnel communication portions 13 to 15 from the transmission portion 12 is a unicast address, the addresses of the terminal devices 101 to 103 are set to the same address such as "10. 8. 1. 100". As a result, the transmission portion 12 may merely send packets having the same destination address to the tunnel communication portions 13 to 15. In this case, the source addresses may differ among the tunnel communication portions 13 to 15 from one another. Alternatively, packets send to the tunnel communication portions 13 to 15 from the transmission portion 12 may have the same payload and have headers which source addresses and destination addresses differ from one anther.

Further, in the aforesaid concrete example, although the explanation is made as to a case where the encapsulated packet 61 includes the ESP header and the ESP trailer, the packet may not include them. In this manner, the construction of an encapsulated packet is not limited so long as the encapsulation is made.

As described above, in the information processing system according to the embodiment, since the information processing apparatus 10 is arranged to transmit packets to the terminal devices 101 to 103 via a plurality of the tunnel communications, even if there is a router not coping with the multicast, the multicast transmission can be performed and image data etc. can be transmitted to the terminal devices 101 to 103. Further, since it is not necessary to manage the multicast group by using the IGMP, a communication load for the management can be reduced. Further, it becomes possible to reduce a load of the processing of confirming whether or not the terminal device to which image data etc. is transmitted has a right of receiving a multicast packet. Further, as shown in the aforesaid concrete example, when the respective packets encapsulated in the tunnel communication portions 13 to 15 are the same, the transmission portion 12 may merely send the same packets to the tunnel communication portions 13 to 15. Thus, since it is not necessary to change an inner packet contained in an encapsulated packet at every destination terminal device, the processing of the transmission portion 12 is quite simple, advantageously.

In the concrete example of the embodiment, the explanation is made as to a case where the address of the network camera 200 is the private address and the information processing apparatus 10 couples the LAN belonging to the network camera 200 to the communication line 100 (WAN).

Further, the network camera 200 may be coupled to the communication line 100. When the cameral 200 is coupled to the communication line 100, transmission information may be transmitted in a unicast manner from the network camera 200 to the information processing apparatus 10 or the tunnel communication may also be performed from the network camera 200 to the information processing apparatus 10. In the former case, the information processing apparatus 10 may convert a packet having a unicast address into a packet having a multicast address. Further in the latter case, transmission information may be transmitted from the network camera 200 to the information processing apparatus 10 by a packet which is obtained by encapsulating a multicast packet. In this case, the information processing apparatus 10 may receive the packet obtained by encapsulating the multicast packet, then rewrite the header of the packet obtained by encapsulating the multicast packet and transmit the packet thus rewritten. The header of the packet obtained by encapsulating the multicast packet represents the UPD/IP header shown at the leftmost side of the packet shown in Fig. 6, for example. Alternatively, the information processing apparatus may de-encapsulate the packet once, then encapsulate again the multicast packet having been de-encapsulated and transmit the packet thus encapsulated again.

In the case of rewriting the header of the packet obtained by encapsulating the multicast packet and transmitting the packet thus rewritten, each of the first to third tunnel communication portions 13 to 15 transmits the encapsulated packet. That is, transmission information accepted by the reception portion 11 is an encapsulated packet and each of the first to third tunnel communication portions 13 to 15 may not encapsulate the packet. In this case, the portion 2 may rewrite the header of the encapsulated packet or each of the first to third tunnel communication portions 13 to 15 may rewrite the header.

Further, in this embodiment, the explanation is made as to a case where packets relating to transmission information are transmitted via all the paths of the tunnel communication preformed by the information processing apparatus 10. Furthermore, packets relating to transmission information may be transmitted via two or more tunnel communication paths among all the paths of tunnel communication performed by the first to third tunnel communication portions 13 to 15. This may be realized in a manner explained below or another method.

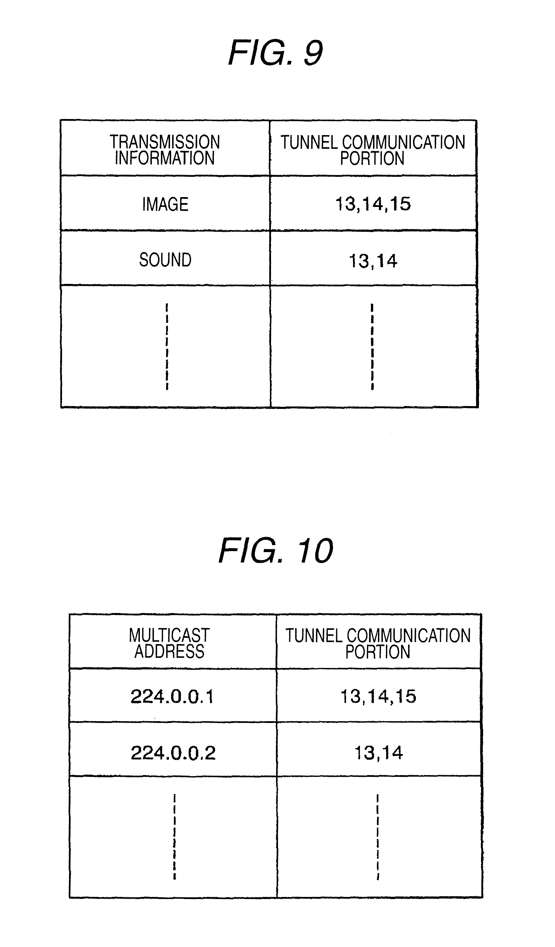

For example, it is supposed that the transmission portion 12 has a table shown in Fig. 9 that makes correspond between the kinds of transmission information and the tunnel communication portions. In the table of Fig. 9, numerals (13, 14, 15) showing attributes "tunnel communication portions" correspond to the symbols of the tunnel communication portions shown in Fig, 1, respectively. For example, the transmission portion 12 sends packets relating to transmission information of image data to the tunnel communication portions 13 to 15 and sends packets relating to transmission information of sound data to the tunnel communication portions 13 and 14. As a result, image data is transmitted to the terminal devices 101 to 103 and sound data is transmitted to the terminal devices 101 and 102.

Further, for example, it is supposed that each of the tunnel communication portions 13 to 15 can access a table shown in Fig. 10. The table shown in Fig. 10 makes correspond between multicast addresses and the tunnel communication portions that transmit the packets of the multicast addresses. Like the table shown in Fig. 9, numerals showing attributes "tunnel communication portions" correspond to the symbols of the tunnel communication portions shown in Fig, 1, respectively. For example, when each of the tunnel communication portions 13 to 15 receives a packet with the multicast address of "224. 0. 0. 1" from the transmission portion 12, each of the tunnel communication portions 13 to 15 encapsulates and transmits the packet. On the other hand, when each of the tunnel communication portions 13 to 15 receives a packet with the multicast address of "224. 0. 0. 2" from the transmission portion 12, although each of the tunnel communication portions 13 and 14 encapsulates and transmits the packet, the third tunnel communication portion 15 does not transmit the packet. As a result, the packet with the multicast address of "224. 0. 0. 1" is transmitted to the terminal devices 101 to 103, whilst the packet with the multicast address of "224. 0. 0. 2" is transmitted to the terminal devices 101 and 102.

Further, for example, in the case where the transmission portion 12 sends a packet with a unicast address to each of the tunnel communication portions 13 to 15, the unicast address may be changed at every group of the terminal devices. For example, in the case where there are the five terminal devices and the five tunnel communication portions, it is supposed that an address used in an inner packet contained in an encapsulated packet of each of the two terminal devices is set to "10. 8. 1. 100", whilst an address used in an inner packet contained in an encapsulated packet of each of the remaining three terminal devices is set to "10. 8. 1. 200". When it is desired to transmit packets to the two terminal devices in the former case, the transmission portion 12 sends a packet with the destination address of "10. 8. 1. 100" to each of the tunnel communication portions. Thus, only the tunnel communication portions which perform the tunnel communications with the terminal devices corresponding to the address "10. 8. 1. 100" encapsulate and transmit the packet. On the other hand, when the transmission portion 12 sends a packet with the destination address of "10. 8. 1. 200" to each of the tunnel communication portions, only the tunnel communication portions which perform the tunnel communications with the terminal devices corresponding to the address "10. 8. 1. 200" encapsulate and transmit the packet. In this case, for example, the transmission portion 12 may send a packet with the destination address of "10. 8. 1. 100" only to the tunnel communication portions which perform the tunnel communications with the terminal devices corresponding to the address "10. 8. 1. 100".

Further, for example, in the case where the transmission portion 12 sends a packet to each of the tunnel communication portions 13 to 15, the transmission portion may refer to the table shown in Fig. 10 and send a packet with the destination multicast address of "224. 0. 0. 1" to each of the tunnel communication portions 13 to 15, whilst send a packet with the destination multicast address of "224. 0. 0. 2" to each of the tunnel communication portions 13 and 14.

In the aforesaid explanation, although, for the sake of the explanation, the symbols of the tunnel communication portions of Fig. 1 are used as information for discriminating the tunnel communication portions, the information for discriminating the tunnel communication portions may be anyone. For example, the information may be identification information set to the respective tunnel communication portions. Alternatively, when tunnel identification information which is information for discriminating the tunnels is set, the information may be the tunnel identification information. Alternatively, the information may be an address on the information processing apparatus 10 side or terminal devices 101 to 103 side used in an inner packet contained in an encapsulated packet in the tunnel communication.

Further, in this embodiment, although the explanation is made as to a mode where only the one information processing apparatus 10 is used, a plurality of apparatuses each similar to the information processing apparatus 10 may be used in a parallel manner so that information is transmitted simultaneously to the plurality of terminal devices.

Further, in this embodiment, the explanation is made as to a case where an address used for an encapsulated packet is set at every tunnel communication portion when the encapsulated packets are transmitted from the tunnel communication portions. Further, a source address used in the encapsulated packet may not be set at every tunnel communication portion. The source address used in the encapsulated packet may be a source address of a packet accepted by the reception portion 11 or an address set in the potion 11 or the transmission portion 12 etc.

Further, the communication protocol in the aforesaid embodiment may be IPv4 (Internet Protocol version 4) or IPv6 (Internet Protocol version 6), for example.

Further, in the aforesaid embodiment, each of the processings and each of the functions may be realized by being concentrically processed by a single apparatus or a single system or may be processed in a distributed manner by a plurality of apparatuses or a plurality of systems.

Further, in the aforesaid embodiment, each of the constituent elements may be configured by a dedicated hardware. The constituent element which can be realized by a software may be realized by executing a program. For example, the respective constituent elements can be realized in a manner that the program execution portion of a CPU etc. reads and executes a software program recorded in a recording medium such as a hard disc or a semiconductor memory etc. The software realizing the information processing apparatus in the aforesaid embodiment is formed by the following program.

That is, the program is arranged to make a computer execute an accepting step of accepting transmission information which is information to be transmitted, a transmission step of sending a packet relating to the transmission information accepted by the accepting step to a plurality of the tunnel communication portions each of which performs the tunnel communication with the terminal device, and a tunnel communication step in which the plurality of the tunnel communication portions transmit encapsulated packets to a plurality of the terminal devices, respectively. The destination addresses of the inner packets contained in the encapsulated packets transmitted from the plurality of the tunnel communication portions are the same.

This program may be arranged to make the computer further execute an encapsulating step in which the plurality of the tunnel communication portions encapsulate packets sent to the plurality of the tunnel communication portions in the transmission step, respectively.

In the aforesaid program, each of the transmission step of transmitting information and a receiving step of receiving information etc. does not include at least a processing performed only by the hardware, for example, the processing performed in a modem or an interface card etc. in the transmission step.

Further, the program may be executed by being downloaded from a server etc. or by being read from a predetermined recording medium (for example, an optical disc such as a CD-ROM, a magnetic disc, a semiconductor memory).

The number of the computer for executing the program may be a single or plural. That is, the processing may be performed concentrically or in a distributed manner.

The invention is not limited to the aforesaid embodiment and various modifications are possible. Such modifications are of course contained in the range of the invention.

### <Industrial Applicability>

As described above, the information processing apparatus etc. of the invention can simultaneously transmit data such as image data to a plurality of the terminal devices and are useful as the information processing apparatus etc. for transmitting information.

## Claims

1. An information processing apparatus, comprising:
a reception portion which accepts transmission information which is information to be transmitted;
a plurality of tunnel communication portions which perform tunnel communications with different terminal devices, respectively; and
a transmission portion which transmits a packet relating to the transmission information accepted by the reception portion to a plurality of the terminal devices via the plurality of tunnel communication portions, respectively,
wherein a destination addresses of an inner packet contained in encapsulated packets to be transmitted from the plurality of tunnel communication portions are same.

2. The information processing apparatus according to claim 1, wherein each of the plurality of tunnel communication portions encapsulates and transmits a packet.

3. The information processing apparatus according to claim 1, wherein the transmission portion transmits the packets via all paths of the tunnel communications performed by the tunnel communication portions.

4. The information processing apparatus according to claim 1, wherein the packets relating to the transmission information are transmitted via two or more of all paths of the tunnel communications performed by the tunnel communication portions.

5. The information processing apparatus according to claim 1, wherein the destination address of the inner packet contained in the encapsulated packet to be transmitted from the tunnel communication portion is a multicast address.

6. The information processing apparatus according to claim 1, wherein the inner packet contained in the encapsulated packets to be transmitted from the plurality of tunnel communication portions are same.

7. The information processing apparatus according to claim 1, wherein the reception portion receives the transmission information.

8. An information processing system including an information processing apparatus and an information transmission apparatus for transmitting transmission information to the information transmission apparatus, wherein the information processing apparatus, comprising:
a reception portion which accepts transmission information which is information to be transmitted;
a plurality of tunnel communication portions which perform tunnel communications with different terminal devices, respectively; and
a transmission portion which transmits a packet relating to the transmission information accepted by the reception portion to a plurality of the terminal devices via the plurality of tunnel communication portions, respectively,
wherein a destination addresses of an inner packets contained in encapsulated packets to be transmitted from the plurality of tunnel communication portions are same.

9. An information processing method, comprising:
a reception step for accepting transmission information which is information to be transmitted;
a transmission step for sending a packet relating to the transmission information accepted by the reception step to a plurality of plurality of tunnel communication portions which perform tunnel communications with different terminal devices, respectively; and
a tunnel transmission step in which the plurality of tunnel communication portions transmit encapsulated packets to a plurality of the terminal devices, respectively,
wherein a destination addresses of inner packet contained in the encapsulated packets to be transmitted from the plurality of tunnel communication portions are same.

10. The information processing method according to claim 9, further comprising an encapsulating step in which the plurality of tunnel communication portions encapsulate the packets sent to the plurality of tunnel communication portions in the transmission step.

11. A program for making a computer execute following steps which comprising:
a reception step for accepting transmission information which is information to be transmitted;
a transmission step for sending a packet relating to the transmission information accepted by the reception step to a plurality of plurality of tunnel communication portions which perform tunnel communications with different terminal devices, respectively; and
a tunnel transmission step in which the plurality of tunnel communication portions transmit encapsulated packets to a plurality of the terminal devices, respectively,
wherein a destination addresses of an inner packets contained in the encapsulated packets to be transmitted from the plurality of tunnel communication portions are same.
